Europäisches Patentamt

(19) European Patent Office    (11) Publication number: **0 028 492**

Office européen des brevets    **A1**

(12) **EUROPEAN PATENT APPLICATION**

(21) Application number: 80303820.7    (51) Int. Cl.³: **C 03 B 37/02**
                                            **C 03 B 7/02**
(22) Date of filing: 28.10.80

(30) Priority: 31.10.79 JP 140816/79

(43) Date of publication of application:
13.05.81 Bulletin 81/19

(84) Designated Contracting States:
DE FR GB IT NL

(71) Applicant: NITTO BOSEKI CO., LTD.
1 Aza Higashi
Gonome Fukushima-shi(JP)

(72) Inventor: Minezaki, Hisao
6-3, Jinbacho
Fukushima-shi(JP)

(72) Inventor: Nakazawa, Koji
18-3, Uchida
Fushiogami Fukashima-shi(JP)

(72) Inventor: Fujita, Toshihito
1, Aza Hino
Toyano Fukushima-shi(JP)

(74) Representative: Grundy, Derek George Ritchie et al,
CARPMAELS & RANSFORD 43, Bloomsbury Square
London WC1A 2RA(GB)

(54) Apparatus for producing glass fibers by direct melt process.

(57) A direct melt process type glass fiber production apparatus in which a plurality of bushing (4') rectangular in cross section are arrayed in row in each forehearth (3') in such a way that the shorter sides of each bushing (4') are in parallel with the lengthwise direction of the forehearth (3') and a pair of resistance heating terminals (5') are attached to the centers of the shorter side walls of each bushing (4'), whereby the conventional guide shoes can be eliminated and the uniform lengthwise and widthwise temperature distributions of the molten glass can be maintained in every bushing (4').

FIG. 3

- 1 -

## APPARATUS FOR PRODUCING GLASS FIBERS
## BY DIRECT MELT PROCESS

BACKGROUND OF THE INVENTION:

The present invention relates to an improvement of an apparatus for producing glass fibers by direct melt process in which one or more forehearths are communicated through a molten glass distribution channel with a glass melting and refining furnace; a plurality of bushings each provided with an orifice plate, which has a large number of orifices and is disposed at the bottom of the bushing, are arrayed in row in each forehearth; and glass filaments are drawn through the orifices of the orifice plate of the bushing into one or more strands which in turn are wound into one or more packages by a winder disposed under each bushing.

The apparatus of the type described has been well known in the art and disclosed in for example United States Patent No. 3,406,021 and No. 3,561,939. In this apparatus, in order to supply the molten glass to every bushing in each forehearth under the same conditions, the forehearth, which is U-shaped in cross section, is constructed with high-quality heat insulating refractories and the molten glass is caused to flow through the forehearth in the longitudinal direction thereof in such a way that the flow rate and the liquid level of the molten glass are maintained constant over the whole length of the forehearth.  In addition, in order to compensate for the heat dissipation of the molten glass as it flows toward the end of the forehearth, a plurality of auxiliary heating means such as burners are mounted on the side walls of the forehearth and spaced apart by a suitable distance from each other in the longitudinal direction.  The transverse temperature distribution of the molten glass flowing through the forehearth is such that the temperature is highest at the center line of the forehearth, gradually drops toward the side walls and is lowest at the side walls. When a mass of the molten glass with such temperature distribution or gradient as described above flows into the bushing, the glass filaments drawn have different diameters in the widthwise direction of the forehearth. In order to overcome this problem, the bushings are so arranged that the longer sides of each rectangular bushing are in parallel with the longitudinal direction of the forehearth while the shorter sides are at right angles to the longitudinal direction, whereby a mass of the molten glass which is centered around the center line of the forehearth and has a small temperature distribution or gradient as possible flows into each bushing as will be described in detail below.

In the direct melt process type glass fiber production apparatus, a drawing and winding room is arranged to extend in parallel with and below the forehearth for the sake of facilitating the drawing and winding operations. In this room one winder is disposed below each bushing in such a way that the axis of rotation of the spindle of the winder is perpendicular to the longitudinal direction of the forehearth, whereby the operators can face one ends of the spindles of the winders. Therefore the glass filaments are drawn into one or more strands which in turn are wound by the winder whose axis of rotation is perpendicular to the lengthwise direction of the bushing. As a result, the following problems arise. A sizing application roller and a gathering roller must be disposed in parallel with the lengthwise direction of the bushing in order that the wrapping or contact angle of the glass filaments with respect to the rollers can be made as small as possible, whereby the overall tension exerting on the glass filaments can be reduced and the individual glass filaments are exerted with a uniform tension. In the case where the glass filaments drawn from one bushing are divided into a plurality of strands, they should be divided in the lengthwise direction of the bushing in view of the operational convenience. In order to wind the strand or strands thus formed by the winder whose axis of rotation is perpendicular to the lengthwise direction of the bushing as described previously a guide shoe must be provided, whereby the strands are redirected through 90° before they are wound by the winder. Because of this 90° turn, the qualities of the strands are degraded to some extent.

SUMMARY OF THE INVENTION:

The present invention was made therefore to overcome the above and other problems encountered in the prior art direct melt process type glass fiber production apapratus.

Briefly stated, to the above and other ends, the present invention provides an apparatus for producing glass fibers by direct melt process comprising; a glass melting and refining furnace; at least one elongate forehearth communicated with said glass melting and refining furnace through a molten glass distribution channel and filled with molten glass flowing in the longitudinal direction thereof; a plurality of bushings arrayed in one row extending in the longitudinal direction of said forehearth and opened at their tops to the bottom of said forehearth, each said bushing being rectangular in cross section and disposed in such a way that the shorter sides thereof are in parallel with the longitudinal direction of said forehearth and having at its bottom an orifice plate with a large number of orifices; a pair of electric resistance heating terminals attached to said bushing at the centers of the shorter sides thereof, respectively; a plurality of gathering rollers, each being disposed below each said bushing with its axis extending perpendicularly to the longitudinal direction of said forehearth for gathering a large number of glass filaments drawn through said orifice plate into one or more strands; and a plurality of winders, each being disposed below each said gathering roller and having a spindle extending perpendicularly to the longitudinal direction of said forehearth for winding said strands into one or more packages.

The above and other objects, effects and features of the present invention will become more apparent from the following description of a preferred embodiment thereof taken in conjunction with the accompanying drawings.


BRIEF DESCRIPTION OF THE DRAWINGS:

Fig. 1 is a plan view showing the arrangement of bushings in a prior art direct-melt-process type glass fiber production apparatus;

Fig. 2 shows the temperature distributions of molten glass in the forehearth and in the bushing of the apparatus shown in Fig. 1;

Fig. 3 is a plan view showing the arrangement of bushing in a direct-melt-process type glass fiber production apparatus in accordance with the present invention;

Fig. 4 shows the temperature distributions of molten glass in the forehearth and in the bushing in the apparatus shown in Fig. 3;

Fig. 5a is a front view showing the step of drawing filaments into strands and the subsequent step of winding the strands into a package in the apparatus shown in Fig. 1;

Fig. 5b is a side view thereof;

Fig. 6a is a view similar to Fig. 5a but showing the corresponding steps in the apparatus in accordance with the present invention shown in Fig. 3; and

Fig. 6b is a side view thereof.

Same reference numerals are used to designate similar parts throughout the figures.

DESCRIPTION OF THE PREFFERRED EMBODIMENT:

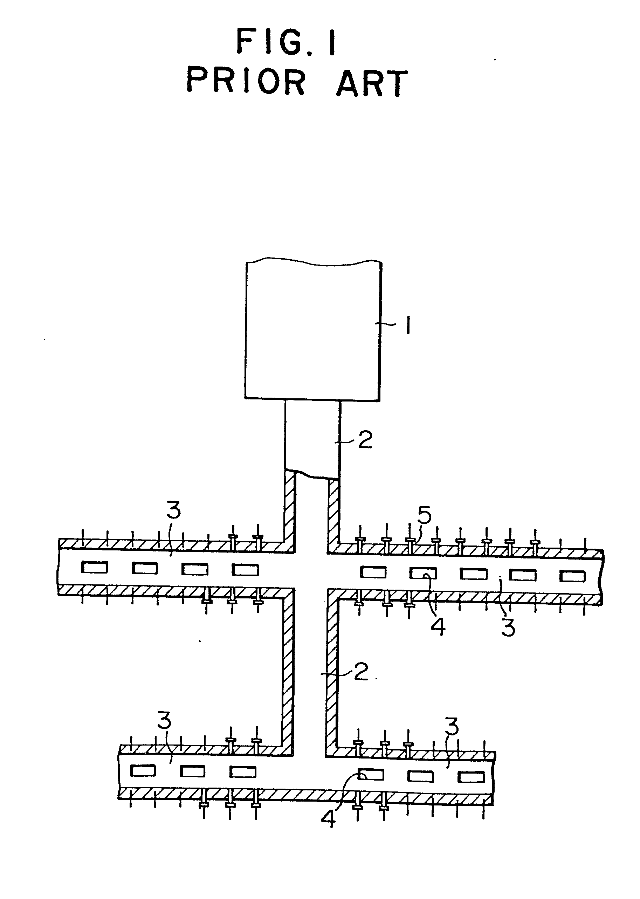

Prior to the description of the preferred embodiment of the present invention, for the sake of comparison with the present invention, a prior art apparatus for producing glass fibers will be briefly described with reference to Fig. 1. The glass is melted by a glass melting and refining furnace 1 and the melted glass is distributed through a distribution channel 2 into forehearth 3. The melted glass flows into each rectangular bushing 4 extending in the longitudinal direction of the forehearth 3 and is drawn into filaments through orifices of an orifice plate disposed at the bottom of the bushing 4. The forehearth 3 is provided on its side walls with a plurality of auxiliary heating means such as burners 5 so that the uniform temperature distribution of the melted glass can be maintained in the longitudinal direction.

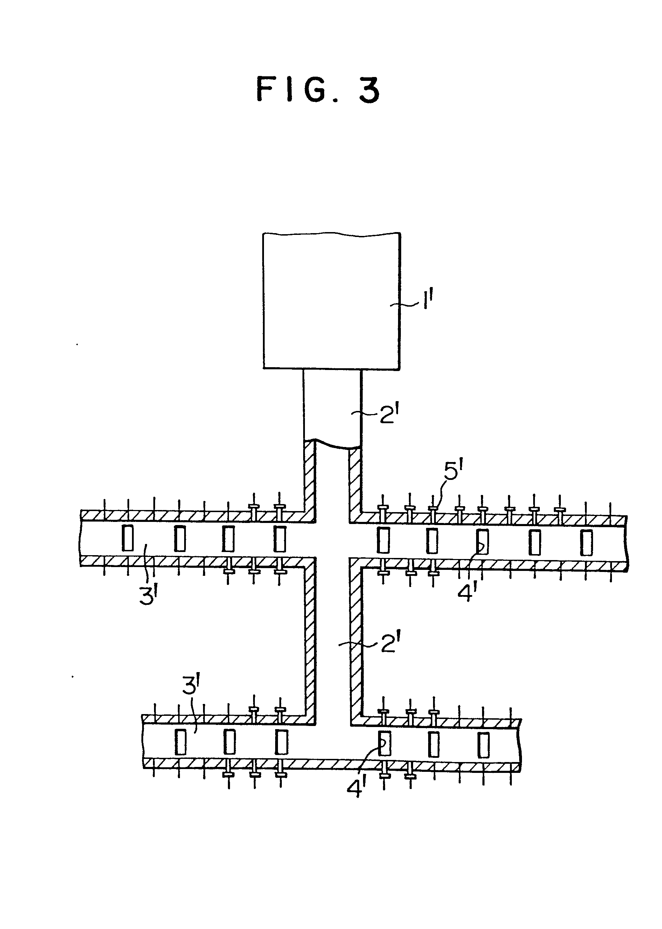

Referring to Fig. 3, the glass fiber production apparatus in accordance with the present invention is substantially similar in construction to the prior art apparatus described with reference to Fig. 1 except that while in the prior apparatus the longer sides of each bushing 4 are in parallel with the longitudinal axis of the forehearth 3, the shorter sides of each bushing 4' are in parallel with the longitudinal axis of the forehearth 3'. As with the prior art apparatus, the glass is melted in a glass melting and refining furnace 1' and the melted glass flows into the forehearths 3' through a distribution channel 2'. The melted glass flows into each bushing 4' and is drawn through orifices of the orifice plate at the bottom of the bushing 4' into a large number of filaments. In order to maintain the uniform temperature distribution or to prevent the temperature drop of the molten glass as it flows toward the end of the forehearth 3', a plurality of auxiliary heating means such as burners 5' are also provided.

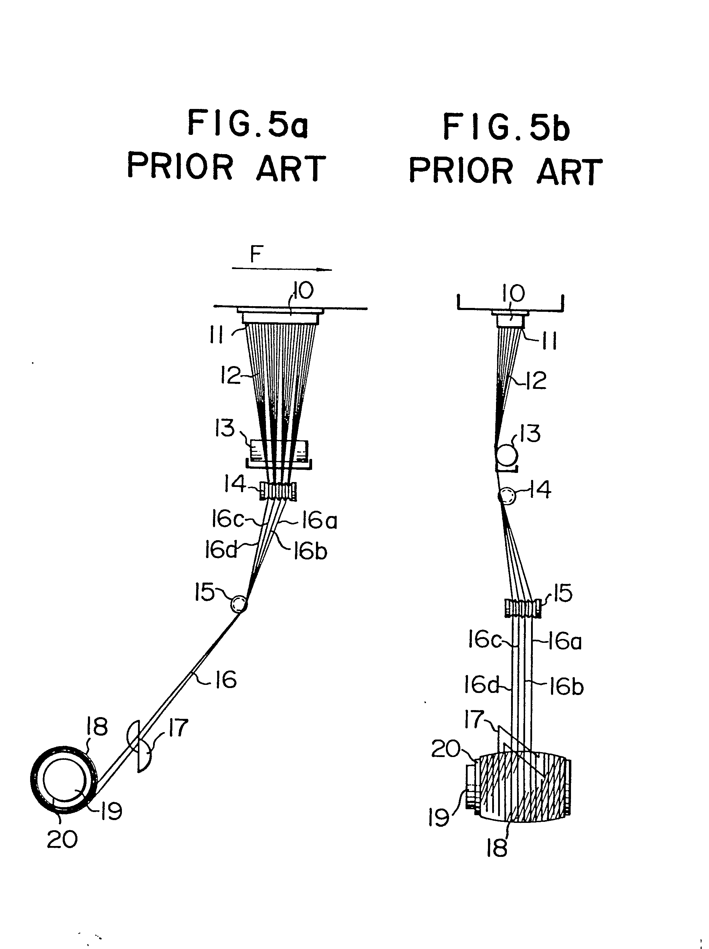

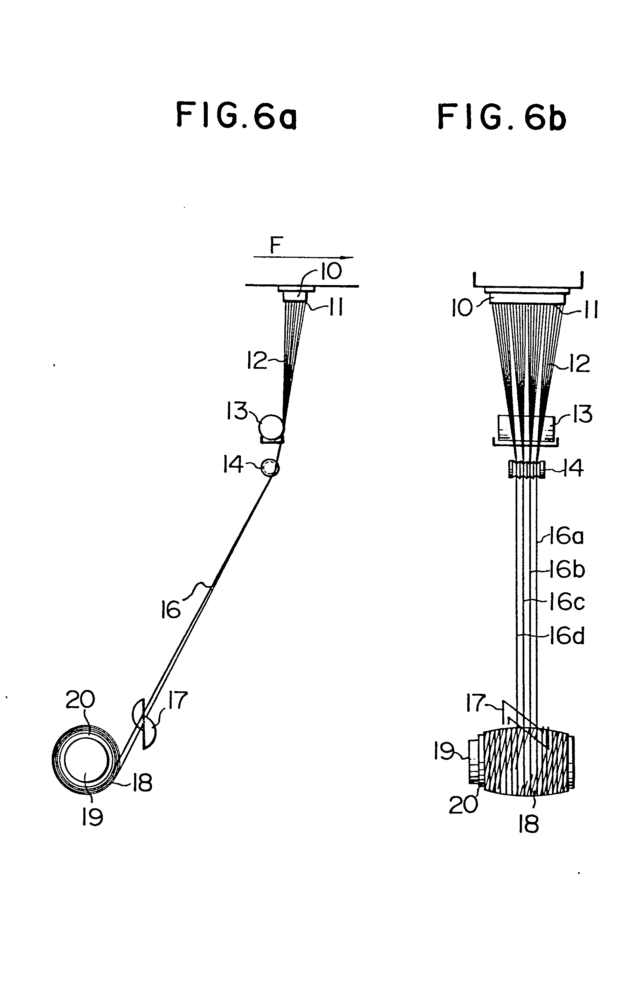

Referring to Figs. 5a and 5b showing front and side views, respectively, of the prior art apparatus in which the longer sides of each bushing 4 are in parallel with the longitudinal axis of the forehearth 3, the axis of a spindle 19 of a winding machine is disposed perpendicular to the longitudinal axis F of the forehearth 3. In like manner, the axis of rotation of the spindle 19 of the winding machine is also disposed perpendicular to the longitudinal axis F of the forehearth 3' in the glass fiber production apparatus in accordance with the present invention in which the shorter sides of each bushing are in parallel with the longitudinal axis F of the forehearth 3' as shown in front view in Fig. 6a and in side view in Fig. 6b.

In both Fig. 5 and 6, reference numeral 10 denotes a bushing of the forehearth 3 or 3'; 11, an orifice plate at the bottom of the bushing 10; 12, glass filaments drawn through orifices of the orifice plate 11; 13, a sizing applicator; 14, a gathering roller 16, a strand; 17, a traverse motion; 18, the strand wound around a bobbin 20 on the winding spindle 19 of the winding machine; and 15, a guide shoe which is used only in the prior art apparatus as shown in Fig. 5.

In both the glass fiber production apparatus shown in Fig. 5 and Fig. 6, the glass filaments 12 are applied with size by the sizing applicator 13 and then drawn into four separate strands 16a, 16b, 16c and 16d by gathering roller 14 which strands are traversed by the traverse motion 17 while being maintained in parallel relationship with each other and wound around the bobbin 20 on the spindle 19 to form a package. In the case of the prior art apparatus shown in Fig. 5, regardless of whether the four strands 16a-16d are wound into a single package or into four packages on a bobbin or bobbins whose axis or axes are perpendicular to the axis of the gathering roller 14, the guide shoe 15 must be provided so that the strands 16a-16d are redirected. As a result, the angles of contact of these strands 16a-16d with respect to the gathering roller 14 and the guide shoes 15 are different from each other so that the tensions exerted to these strands are also different. It follows therefore that when they are traversed, the traversing strokes become different. As a consequence, when the finished packages are unwound in the next step, the unwound strands tend to tangle each other. In addition, fluffs are produced due to the variations in tension. These defects are more pronounced as the number of separated strands is increased.

When all the filaments 12 are drawn into a single strand to form a single package, the guide shoe 15 can be eliminated if the axis of the gathering roller 14 is disposed in parallel with the axis of the spindle 19. In such case, however, the wrapping angles of the individual filaments 12 on the gathering roller 14 become different so that the tensions of the individual filaments are also different. As a result, high quality strand packages cannot be obtained.

On the other hand, according to the present invention, the use of the guide shoe 15 can be completely eliminated as shown in Fig. 6 so that undesired additional contacts with the guide shoe 15 of the filaments 12, which are weak in bending and friction, can be avoided. In addition, even when the filaments 12 are drawn into a plurality of strands, the filaments 12 and the strands 16 can be maintained at the uniform tension so that the strands 16 can be wound into uniform packages. As a result, no problem will arise when the packages are unwound. Thus according to the present invention, extremely high quality packages can be produced regardless of whether all the filments 12 are drawn into a single strand which in turn is wound into a single package, or the filaments 12 are drawn into a plurality of strands which in turn are maintained in parallel with each other and wound into a single package or into a plurality of packages on the single bobbin.

Another distinguishing feature of the present invention is that the molten glass filled in the bushing can be maintained at the completely uniform temperature in the longitudinal direction of the bushing. In the forehearth 3 or 3', the molten glass has such a temperature distribution that the temperature is highest at the center line and gradually drops toward the sides and is lowest at the sides. Therefore in the prior art glass fiber production apparatus, the longer sides of each busing 4 are in parallel with the longitudinal axis of the forehearth 3 so that the molten glass with as small a temperature difference range as possible flows into the bushing 4 and consequently the temperature distribution of the glass in the bushing can be maintained as uniform as possible. In addition, in order to more improve the uniformity of the temperature distribution, electric terminals have been mounted at the centers of shorter sides of the bushing so that the glass is heated by Joule heat, but a completely uniform temperature distribution cannot be attained. However, as described elsewhere, according to the present invention, the shorter sides of the bushing 4' are made in parallel with the longitudinal axis of the forehearth 3' and the terminals are attached to the shorter sides so that a completely uniform temperature distribution can be attained.

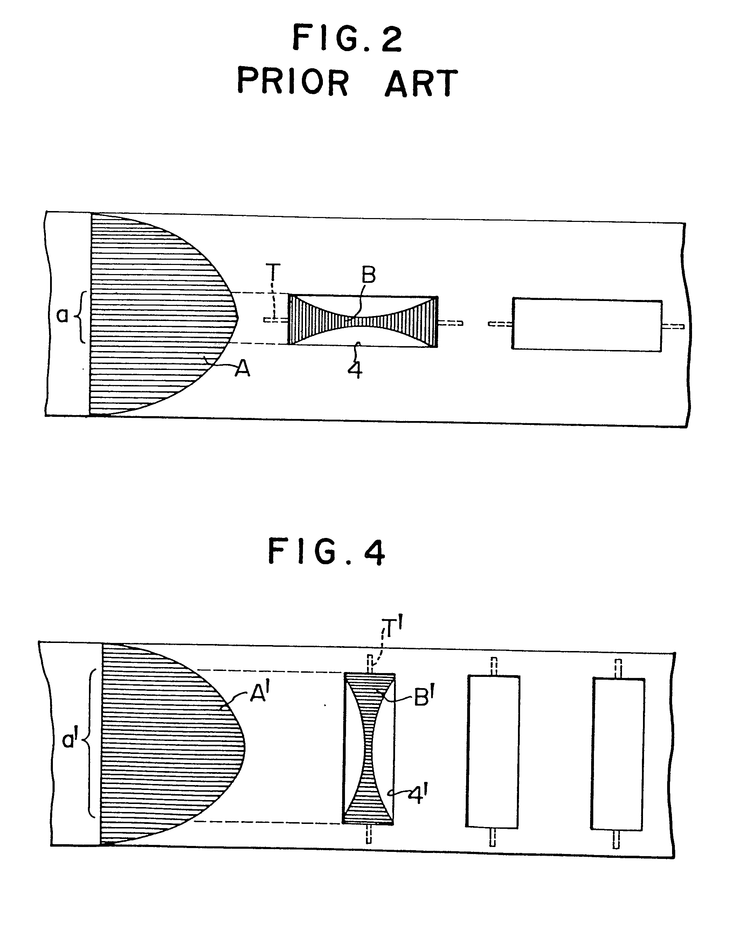

More particularly referring to Fig. 2 showing the prior art arrangement of the bushing, the temperature distribution of the glass in the forehearth 3 which is highest at the center line, gradually drops toward the sides of the forehearth and is lowest at the sides is shown at A. Therefore a mass of glass with the narrow temperature range a flows into the bushing 4. The temperature drop of the molten glass in the longitudinal direction of the forehearth 3 is prevented by the auxiliary heating means such as burners 5 as described elsewhere. Therefore, the uniform temperature distribution of the molten glass can be maintained lengthwise in the bushing 4, but the temperature distribution is not uniform widthwise.

In order to overcome this problem, as described elsewhere, the terminals T are attached to the shorter sides of the bushing so that the molten glass is heated by Joule heat. The temperature distribution by Joule heat is varied depending upon the area of the heating surface of the terminal T. When the terminals T have a large heating area, the temperature becomes higher at the shorter sides as shown at B in Fig. 2 and the smaller the area of the heating surfaces, the lower the temperature becomes at the shorter sides. As a result, the uniform temperature distribution cannot be attained even by the best adjustment of the heating surfaces with the temperature distribution A.

On the contrary, according to the present invention, the temperature distribution of the molten glass filled within the bushing 4' is maintained uniform in the direction of the shorter sides thereof or in the longitudinal direction of the forehearth 3' because of not only the shorter length of the bushing in this direction but also additional heating by the auxiliary heating means such as burners 5' provided on the side walls of the forehearth 3'. However the temperature distribution in the direction of the longer sides of the bushing 4' or in the transverse direction of the forehearth 3' has a variation by far greater than that in the bushing 4 in the prior art arrangement as shown in Fig. 2, because, as shown in Fig. 4, the bushing 4' is filled with a mass of molten glass within a temperature range a' in the transverse temperature distribution A' of the molten glass flowing through the forehearth 3', which range a' is very large as compared with the range a in Fig. 2. This greater temperature variation can be compensated by means of terminals T' attached to the centers of the shorter sides of the bushing 4' which produce another temperature distribution as shown at B' in which the temperature is highest along the shroter sides and gradually drops toward the center of the bushing 4'. That is, the concave temperature distribution curve B' cancels the convext temperature distribution curve A' so that the resulting temperature distribution in the transverse direction becomes uniform.

Thus according to the present invention, the temperature distribution of the molten glass in the bushing can be made more uniform by merely changing the direction of the bushing in the prior art glass fiber production apparatus through 90°. In addition, since the shorter sides of the bushing are made in parallel with the longitudinal axis of the forehearth, the spacing between the adjacent bushings can be reduced so that the number of bushings arranged in the forehearth can be increased. As a result of the uniform temperature distribution in every bushing, the glass fiber drawing operations can be much stabilized and the high productivity can be ensured.

The prior art orifice plates with 400 - 800 orifices have been increasingly replaced by those with 2,000 - 4,000 oricies so that the bushings have been enlarged in size accrodingly. In the case of the small bushings, the influences on the glass fiber drawing of the temperature distributions both lengthwise and widthwise in the forehearth have been less, but with the large bushings it has been found that the lengthwise and widthwise temperature distributions have considerably great influences on the glass fiber drawing. According to the present invention, the uniform temperature distributions both in lengthwise and widthwise directions can be maintained in every bushing.

Although the foregoing description does not specify the type of the orifice plate, it will be understood by those skilled in the art that the present invention may be applicable to any type of the orifice plate including the both of flat orifice plate and tipped orifice plate.

In summary, according to the present invention, the strand winding step can be simplified and high-quality strands of glass fibers can be obtained. In addition, the uniform lengthwise and widthwise temperature distributions can be ensured in the bushings.

- 1 -

WHAT IS CLAIMED IS:

An apparatus for producing glass fibers by direct melt process comprising;

a glass melting and refining furnace;

at least one elongate forehearth communicated with said glass melting and refining furnace through a molten glass distribution channel and filled with molten glass flowing in the longitudinal direction thereof;

a plurality of bushings arrayed in one row extending in the longitudinal direction of said forehearth and opened at their tops to the bottom of said forehearth each said bushing being rectangular in cross section and disposed in such a way that the shorter sides thereof are in parallel with the longitudinal direction of said forehearth and having at its bottom an orifice plate with a large number of orifices;

a pair of electric resistance heating terminals attached to said bushing at the centers of the shorter sides thereof, respectively;

a plurality of gathering rollers, each being disposed below each said bushing with its axis extending perpendicularly to the longitudinal direction of said forehearth for gathering a large number of glass filaments drawn through said orifice plate into one or more strands; and

a plurality of winders, each being disposed below each said gathering roller and having a spindle extending perpendicularly to the longitudinal direction of said forehearth for winding said strands into one or
more packages.

# FIG. 1
# PRIOR ART

# FIG. 2
# PRIOR ART

# FIG. 4

FIG. 3

# FIG.5a
## PRIOR ART

# FIG.5b
## PRIOR ART

# FIG.6a

# FIG.6b

# EUROPEAN SEARCH REPORT

| | | | |
|---|---|---|---|
| European Patent Office | **EUROPEAN SEARCH REPORT** | Application number | |
| | | EP 80 30 3820.7 | |

## DOCUMENTS CONSIDERED TO BE RELEVANT

| Category | Citation of document with indication, where appropriate, of relevant passages. | Relevant to claim |
|---|---|---|
| | US - A - 4 146 375 (McPHERSON et al.)<br>* fig. 1, 2 *<br>-- | 1 |
| | FR - A - 2 211 407 (JOHNS-MANVILLE CORP.)<br>-- | 1 |
| A | US - A - 3 820 967 (JOHNSON)<br>-- | |
| A | US - A - 4 149 865 (COGGIN, JR. et al.)<br>-- | |
| D | US - A - 3 561 939 (FROBERG et al.)<br>---- | |

**CLASSIFICATION OF THE APPLICATION (Int. Cl.3)**

C 03 B 37/02

C 03 B 7/02

**TECHNICAL FIELDS SEARCHED (Int.Cl.3)**

C 03 B 5/00

C 03 B 7/00

C 03 B 37/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| | | | |
|---|---|---|---|
| X | The present search report has been drawn up for all claims | | |
| Place of search<br>Berlin | Date of completion of the search<br>13-01-1981 | Examiner<br>HÖRNER | |

EPO Form 1503.1  06.78